# EUROPÄISCHE PATENTSCHRIFT

(11) **EP 1 600 982 B1**
(45) Veröffentlichungstag und Bekanntmachung des Hinweises auf die Patenterteilung: **21.10.2009**
(21) Anmeldenummer: 05010386.0
(22) Anmeldetag: 12.05.2005
(51) Int. Cl.: G21C 3/06

(54) **Behälter und Verfahren zur gasdichten Kapselung eines radioaktiven Gegenstandes**
Container and process for gastight encapsulation of a radioactive object
Récipient et procédé pour l'enveloppement imperméable aux gaz d'un objet radioactive

(30) Priorität: 19.05.2004 DE 102004025302
(43) Veröffentlichungstag der Anmeldung: 30.11.2005
(73) Patentinhaber: AREVA NP GmbH, 91052 Erlangen (DE)
(72) Erfinder: Ringleb, Günter, 91341 Röttenbach (DE)
(74) Vertreter: Mörtel & Höfner

(56) Entgegenhaltungen:
- EP-A- 1 248 270
- FR-A- 2 860 640
- FR-A- 2 861 889
- GB-A- 1 196 269
- US-A- 4 197 467

## Beschreibung

Die Erfindung betrifft einen Behälter und ein Verfahren zur gasdichten Kapselung eines radioaktiven Gegenstands. Beim Betrieb eines Leichtwasser-Kernreaktors lässt es sich nicht vermeiden, dass einige Brennstäbe undicht werden und ausgetauscht werden müssen. Die defekten Brennstäbe werden in der Regel nach Zwischenlagerung im Kernkraftwerk zu einem Endlager oder zu einer Wiederaufbereitungsanlage transportiert. Um bei Lagerung und Transport ein Austreten insbesondere von radioaktiven Gasen zu verhindern, wird ein Brennstab noch im Kernkraftwerk unter Wasser in einen Behälter eingebracht, dessen beide Enden von einem Verschlusselement, etwa einem Verschlussstopfen abgedichtet werden. Da dies alles unter Wasser stattfindet, dringt in den Behälter Wasser ein. Das Wasser muss wieder entfernt werden, da es aufgrund der Nachzerfallswärme verdampfen und zu einem unzulässig hohen Innendruck führen würde. Zur Entfernung des Wasser wird in das obere Behälterende ein Gas eingeleitet, wodurch das Wasser verdrängt wird und am unteren Ende des Behälters austritt. Bei einem aus DE 196 40 393 A1 bekannten Verfahren wird ein im wesentlichen aus einem Hüllrohr gebildeter Behälter eingesetzt, dessen unteres Ende mit einer am Hüllrohr angeschweißten Verschlusskappe verschlossen ist. Oberseits wird ein Verschlussstopfen mit einem Außengewinde in ein Innengewinde des Hüllrohres gasdicht eingeschraubt. Um das Einleiten von Gas bzw. das Entfernen von Wasser zu ermöglichen, sind Verschlusskappe und Verschlussstopfen jeweils von einem mit einer Mündungsöffnung in deren Stirnseite ausmündenden Kanal durchsetzt. Im Kanal ist ein in Schließrichtung federbelastetes, mit der Kanalwand als Ventilsitz zusammenwirkendes kugel- oder kegelförmiges Schließelement angeordnet. Nach dem Einsetzen eines defekten Brennstabes in den Behälter wird der Verschlussstopfen fest angezogen und anschließend das Wasser aus dem Behälter durch Einleiten von Gas entfernt. Dazu werden die Schließelemente in Verschlusskappe und Verschlussstopfen mit Hilfe eines Stößels von ihrem Ventilsitz abgehoben, was einen entsprechenden Manipulationsaufwand erfordert. Nachteilig ist weiterhin, dass mit den verwendeten Behältern Leckraten allenfalls im Bereich von 10-⁵ ml bar/s erreichbar sind, wobei mit zunehmender Lagerdauer die Dichtigkeit der Behälter abnimmt.

Davon ausgehend besteht die Aufgabe der Erfindung darin, einen Behälter und ein Verfahren zur gasdichten Kapselung eines radioaktiven Gegenstands vorzuschlagen, die eine Kapselung eines radiaktiven Gegenstandes mit hoher Leckagesicherheit bei vereinfachter Verfahrensdurchführung ermöglichen.

Diese Aufgabe wird hinsichtlich eines Behälters nach Anspruch 1 und hinsichtlich eines Verfahrens nach Anspruch 6 gelöst.

Ein erfindungsgemäßer Behälter weist ein Hüllrohr auf, dessen beidseitige Öffnungen von jeweils einer Verschlusskappe verschließbar sind, wobei die beiden Enden des Hüllrohres mit einem Außengewinde versehen sind und die Verschlusskappen einen mit einem Innengewinde auf das Außengewinde der Hüllrohrenden aufgeschraubten Hülsenabschnitte aufweisen. Weiterhin ist in jeder Verschlusskappe ein Dichtelement angeordnet, das die Innenquerschnittsfläche des Hüllrohrs überdeckt und das mit einer Dichtfläche mit einer die Innenquerschnittsfläche umgrenzenden Gegenfläche zusammenwirkt. Das Dichtelement ist dabei derart mit der Verschlusskappe verbunden, dass es bei festgezogener Verschlusskappe mit seiner Dichtfläche auf die Gegenfläche des Hüllrohres aufgepresst und beim Lösen der Verschlusskappe von der Gegenfläche abgehoben wird. Schließlich ist in jedem Hülsenabschnitt ein die jeweilige Gegenfläche des Hüllrohrs und die Dichtfläche umschließender Innenraum vorhanden, der über eine Öffnung in der Wand des Hülsenabschnitts mit der Umgebung verbunden ist. Die genannten Ausgestaltungen ermöglichen es, dass das gasdichte Festziehen der Verschlusskappen sowie das Entfernen des Wassers aus dem Behälter praktisch in einem Arbeitsschritt und mit nur einem einzigen Werkzeug durchführbar sind. Die Abdichtung des Behälters bzw. des Hüllrohrs erfolgt über nur zwei Dichtflächen bzw. nur eine einzige Dichtpaarung. Schon allein auf Grund der verringerten Anzahl von Dichtflächen ist eine gegenüber herkömmlichen Behältern verbesserte Dichtigkeit erreichbar.

Bei einer bevorzugten Ausgestaltung ist der Innenraum gegenüber dem Innengewinde des Hülsenabschnittes radial erweitert, wobei im Innenraum ein die Dichtfläche tragender Längsabschnitt des Dichtelements drehbar sowie mit Axial- und Radialspiel gehalten ist. Aufgrund dieser Freiheitsgrade kann das Dichtelement eine Kipp- oder Schwenkbewegung gegenüber der Mittellängsachse der Verschlusskappe ausführen, kann sich also innerhalb der Verschlusskappe so ausrichten, dass seine Dichtfläche exakt plan an der Gegenfläche des Hüllrohr anliegt, auch wenn z.B. die Gegenfläche bzw. die Stirnfläche des Hüllrohrs oder eine das Dichtelement beim Festschrauben beaufschlagende Fläche nicht exakt rechtwinklig zur Mittellängsachse des Hüllrohres ausgerichtet sind. Aufgrund der drehbaren Lagerung des Dichtelements in der Verschlusskappe ist beim Festziehen der Verschlusskappe eine Relativdrehung zwischen Dichtelement Hüllrohr, welche die im Sinne einer Dichtpaarung zusammenwirkenden Flächen unter Verringerung der Dichtwirkung beeinflussen könnte, verhindert. Eine Planauflage des Dichtelements auf seiner Gegenfläche wird noch dadurch unterstützt, dass die der Dichtfläche gegenüberliegende Seite des Dichtelement einen sich konkav vorwölbenden Flächenbereich aufweist, der von einer Fläche der Verschlusskappe beaufschlagt ist. Mit den geschilderten Maßnahmen wird somit erreicht, dass die von der Verschlusskappe auf das Dichtelement ausgeübte Anpresskraft sich gleichmäßig über den Umfang der Dichtfläche verteilt.

Bei einer ersten bevorzugten Ausführungsvariante ist der im Innenraum angeordnete Längsabschnitt des Dichtelements mit einem Außengewinde versehen, welches mit dem inneren Ende des Hülsenabschnitts der Verschlusskappe zusammenwirkt. Zur Montage wird das Dichtelement durch das Innengewinde soweit hindurchgeschraubt, bis sich der genannte Längsabschnitt im Innenraum befindet. Dieser weist eine lichte Weite auf, die größer ist als der Durchmesser des Außengewindes. Auf diese Weise ist das weiter oben erwähnte Radialspiel des Dichtelementes gewährleistet. Um ein zu starkes Verkippen und Verkanten des mit Axial- und Radialspiel im Innenraum angeordneten Dichtelements zu verhindern, steht aus seiner Dichtseite ein zentraler, von der Dichtfläche umgriffener und sich rechtwinklig zur Dichtfläche erstreckender Zentrierfortsatz vor, der sich in das Hüllrohrende hinein erstreckt und mit diesem im Sinne einer Axialführung zusammenwirkt.

Bei einer zweiten bevorzugten Ausführungsvariante ist die Fixierung des Dichtelements an der Verschlusskappe auf eine andere Weise gelöst. An der der Dichtfläche gegenüberliegenden Seite des Dichtelements ist ein zentraler, rechtwinklig zur Dichtfläche ausgerichteter zylindrischer Fixierzapfen angeformt, der sich in eine zentrale Bohrung in einer Querwand der Verschlusskappe hinein erstreckt und darin mit Axial- und Radialspiel fixiert ist. Eine fertigungstechnisch einfach zu bewerkstelligende und sicher arbeitende Möglichkeit zur Fixierung des Dichtelements besteht darin, dass der Fixierzapfen in einen Halsabschnitt und einen radial erweiterten Kopfabschnitt unterteilt ist, und dass die Bohrung in der Querwand der Verschlusskappe einen ersten, sich von der Querwand weg erstreckenden verengten Bohrungsbereich und einen sich daran anschließenden radial erweiterten Bohrungsbereich aufweist. Der Kopfabschnitt des Fixierzapfens liegt dabei mit Radialspiel im erweiterten Bohrungsbereich ein und ist so bemessen, dass er durch den verengten Bohrungsbereich spielfrei hindurch steckbar ist. Der Halsabschnitt des Fixierzapfens ist länger als der verengte Bohrungsbereich und durchsetzt diesen mit Radial-und Axialspiel. Eine axiale Fixierung des Dichtelements an der Verschlusskappe ist aufgrund der engen Passung zwischen Kopfabschnitt und verengtem Bohrungsbereich gewährleistet. Wenn der Kopfabschnitt sich erst einmal in dem erweiterten Bohrungsbereich befindet, kann sich der gesamte Zapfen aufgrund des Axial- und vor allen Dingen des Radialspiels zwischen Halsabschnitt und verengten Bohrungsbereich radial bewegen, so dass der Fixierzapfen von seiner anfänglichen koaxialen Ausrichtung zur Mittellängsachse der Bohrung abweicht. Die Wahrscheinlichkeit, dass sich der Fixierzapfen wieder koaxial ausrichtet und durch die Bohrung rutscht, ist dabei gleich null.

Während bisher Dichtelemente eingesetzt wurden, die aus einem anderen, in der Regel weicheren Material als Verschlusskappen und Hüllrohr bestehen, werden bei einem erfindungsgemäßen Behälter Dichtelemente eingesetzt, die aus dem gleichen Material wie die Verschlusskappen und das Hüllrohr, also aus rostfreiem Stahl bestehen, oder bei denen zumindest der die Dichtfläche tragende Bereich aus einem solchen Material besteht. Es hat sich überraschenderweise gezeigt, dass mit solchen Dichtelementen insbesondere zusammen mit den oben geschilderten Ausgestaltungen Leckraten von 10⁻⁷ ml bar/s erreicht werden. Nicht zuletzt wegen des korrosionsfesten Materials der Dichtelemente ist davon auszugehen, dass diese Leckraten über lange Zeiträume erhalten bleiben.

Das in Anspruch 11 definierte Verfahren sieht vor, dass ein Behälter verwendet wird, dessen oberes und unteres Ende mit einer aufgeschraubten Verschlusskappe verschließbar ist, wobei die Verschlusskappen im festgezogenen Zustand jeweils ein Dichtelement an eine Gegenfläche am Hüllrohr andrücken und wobei das Dichtelement im gelösten,Zustand einer Verschlusskappe von der Gegenfläche unter Freilassung einer Trennfuge entfernt ist. Das Gas wird bei gelöster oberer Verschlusskappe über die Trennfuge eingeblasen und Wasser über die Trennfuge der unteren Verschlusskappe aus dem Behälter verdrängt. Nach vollständiger Verdrängung des Wassers aus dem Behälter wird dieser durch Festziehen der Verschlusskappen gasdicht verschlossen.

Bei einer bevorzugten Verfahrensvariante ist vorgesehen, dass der Behälter auf eine Stützstruktur gestellt wird, an welcher eine die untere Verschlusskappe drehfixiert haltende Aufnahme vorhanden ist. Bei dieser Verfahrensvariante muss zum Festziehen beider Verschlusskappen ein Handhabungswerkzeug nur an der unteren Verschlusskappe angreifen. Sobald diese festgezogen ist, wird der gesamte Behälter mitgenommen und auf Grund der Drehfixierung der unteren Verschlusskappe diese auf den Behälter aufgeschraubt. Bei einer weiteren bevorzugten Verfahrensvariante ist die Stützstruktur ein mehrere Behälter fassender Köcher, an dessen unterem Ende die Aufnahme angeordnet ist. Besonders geeignet ist das vorgeschlagene Verfahren zur Abkapselung von undicht gewordenen Brennstäben oder Incoremeßlanzen.

Die Erfindung wird nun anhand zweier in den beigefügten Zeichnungen dargestellter Ausführungsbeispiele näher erläutert. Es zeigen:
- Fig.1: eine erste Ausführungsvarianten eines Behälters in perspektivischer Darstellung,
- Fig.2: einen Längsschnitt durch den Behälter von Fig. 1,
- Fig.3: die Einzelteile des oberen Endes eines Behälters, zum Teil in Längsschnittdarstellung,
- Fig.4: das untere Ende eines Behälters bei abgenommener Verschlusskappe in perspektivischer Darstellung,
- Fig.5: das obere Ende eines Behälters mit nur lose aufgeschraubter Verschlusskappe in teilgeschnittener Darstellung,
- Fig.6: einen Längsschnitt durch eine zweite Ausführungsvariante eines Behälters,
- Fig.7: die Einzelteile eines oberen Endes des Behälters nach Fig. 6,
- Fig.8: eine teilgeschnittene Seitenansicht eines zur Aufnahme von Behältern dienenden Köchers,
- Fig.9: eine Draufsicht in Richtung des Pfeiles IX in Fig. 8,
- Fig.10: einen Querschnitt längs der Linie X-X in Fig.8.

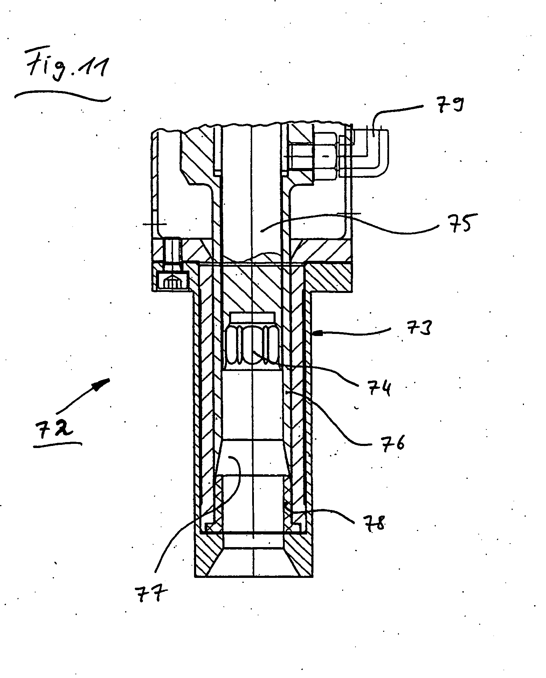

- Fig.11: das untere Ende eines Manipulators im Längsschnitt.

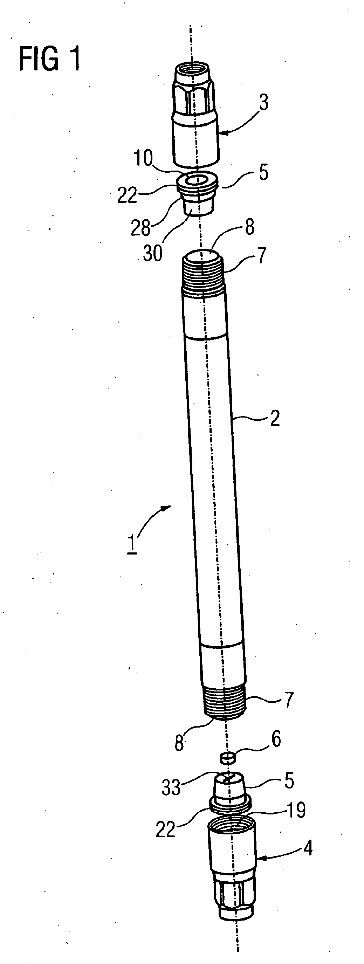

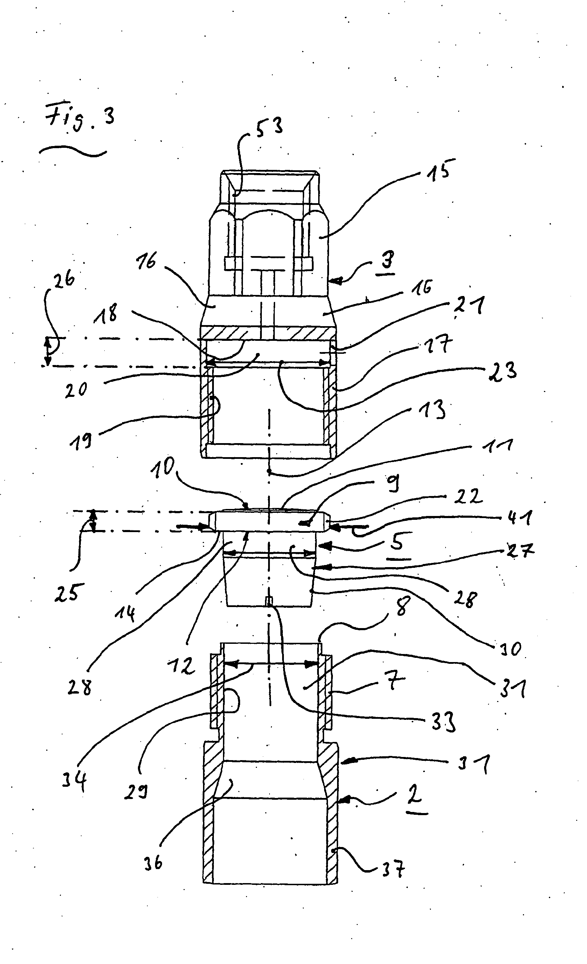

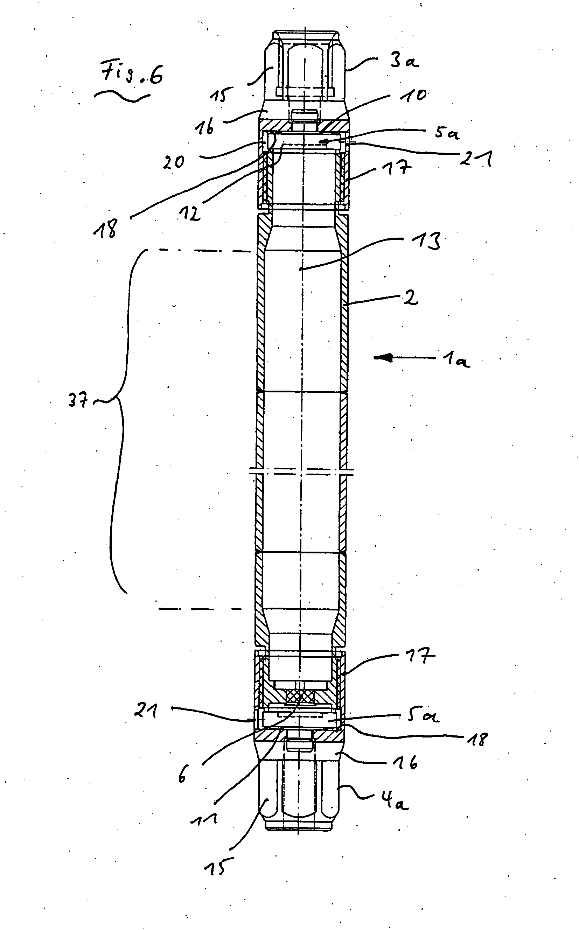

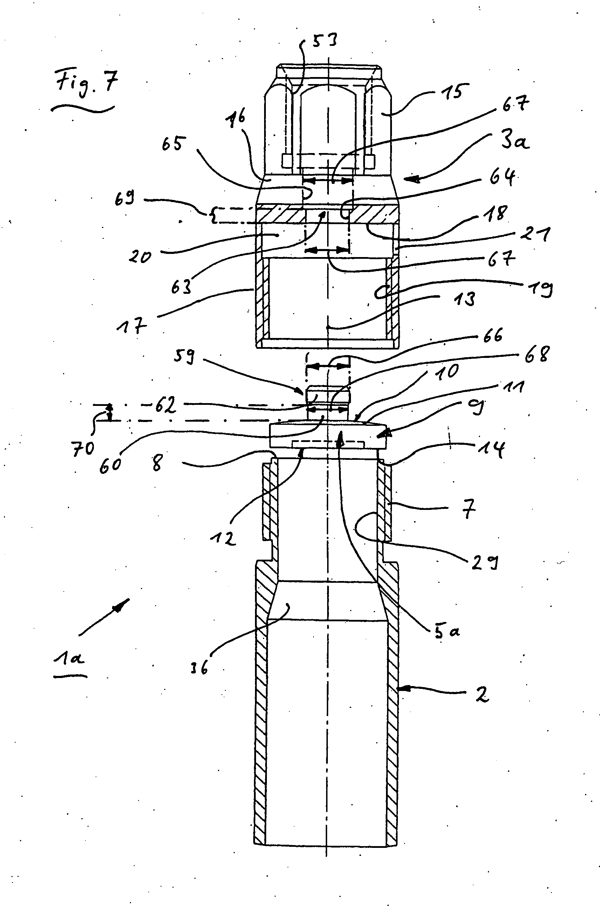

Die in den Abbildungen gezeigten Behälter 1 setzen sich aus einem Hüllrohr 2, einer oberen Verschlusskappe 3, einer unteren Verschlusskappe 4, zwei Dichtelementen 5 und einem Filtereinsatz 6 zusammen. Die beiden Enden des Hüllrohrs 2 weisen ein Außengewinde 7 auf, das sich jeweils bis zur Stirnfläche 8 des Hüllrohrs 2 erstreckt. In jeder Verschlusskappe 3,4 ist ein Dichtelement 5 angeordnet. Der Filtereinsatz 6 befindet sich am unteren Behälterende. Die Dichtelemente 5 des in Fig. 1 bis 3 gezeigten Behälters unterscheiden sich von den Dichtelementen 5a des in Fig. 6 und 7 dargestellten Behälters durch ihre Form und durch die Art ihrer Fixierung innerhalb einer Verschlusskappe 3,4 bzw. 3a,4a. Bei den Dichtelemente 5,5a ist ein scheibenförmiger Längsabschnitt 9 mit im wesentlichen zylindrischer Umfangsfläche gemeinsam. Die vom Behälter 1 wegweisende Seite 10 des Längsabschnitts 9 weist einen ballig ausgebildeten Flächenbereich 11 auf, d.h. dieser ist konkav vorgewölbt und bildet die Oberfläche einer Kugel. Die der Seite 10 gegenüberliegende, im folgenden mit Dichtseite 12 bezeichnete Seite des Längsabschnitts 9 erstreckt sich rechtwinklig zur Mittenlängsachse 13 des Längsabschnitts 9, wobei die Mittellängsachse 13 im Montagezustand gleichzeitig auch die Mittellängsachse des Hüllrohrs 2 und der Verschlusskappen 3,4 ist. Die Dichtseite 12 trägt eine ringförmige, an ihren Außenrand angrenzende Dichtfläche 14. Diese wirkt mit der Stirnfläche 8 des oberen und unteren Hüllrohrendes im Sinne einer Dichtpaarung zusammen.

Die Verschlusskappen 3,4 weisen einen der Drehbetätigung dienenden, in Form eines Sechskants ausgebildeten Betätigungsabschnitt 15 auf. Dieser geht mit einer Schrägschulter 16 in einen Hülsenabschnitt 17 über. Dieser ist innenseitig von einer sich rechtwinklig zur Mittellängsachse 13 erstreckenden Querwand 18 begrenzt. Die Innenwandung des Hülsenabschnitts 17 trägt ein Innengewinde 19. An die Querwand 18 schließt sich in Axialrichtung ein radial erweiterter Innenraum 20 an, der den Längsabschnitt 9 eines Dichtelements 5,5a mit Axial- und Radialspiel aufnimmt.

Bei dem in Fig. 1,2,3 und 5 gezeigten Behälter ist die Umfangsfläche des Längsabschnitts 9 des Dichtelements 5 mit einem Außengewinde 22 versehen, welches mit dem Innengewinde 19 der Verschlusskappen 3,4 zusammenwirkt. Zur Positionierung des Dichtelements 5 innerhalb der Verschlusskappe 3,4 wird dieses mit seinem Außengewinde 22 durch das Innengewinde 19 des Hülsenabschnitts 17 hindurch geschraubt, bis die beiden Gewinde außer Eingriff voneinander gelangen und der Längsabschnitt 9 innerhalb des Innenraums 20 angeordnet ist. Dieser ist radial so erweitert, dass seine lichte Weite 23 größer ist als der Außendurchmesser 41 des Außengewindes 22 des Dichtelements 5 ist. Die Höhe 26 des Innenraums 20 ist dabei größer als die Dicke 25 des Längsabschnitts 9. Auf diese Weise ist der Längsabschnitt 9 im Innenraum 20 mit geringem Axial- und Radialspiel beweglich.

Aus der Dichtseite 12 des Dichtelements 5 steht in Richtung der Mittellängsachse 13 ein Fortsatz 27 ab, welcher sich im Montagezustand in das Hüllrohr 2 im Sinne einer Axialführung hinein erstreckt und mit einem sich an dem Längsabschnitt 9 anschließenden, zylindrischen Abschnitt 28 an der Innenfläche 29 der Enden des Hüllrohrs 2 anliegt. An den zylindrischen Abschnitt 28 schließt ein sich verjüngender Konusabschnitt 30 an. In dessen Stirnseite 32 ist ein Querschlitz 33 eingebracht. Dieses dient zum Einschrauben des Dichtelements 5 in das Innengewinde 19 des Hülsenabschnitts 17.

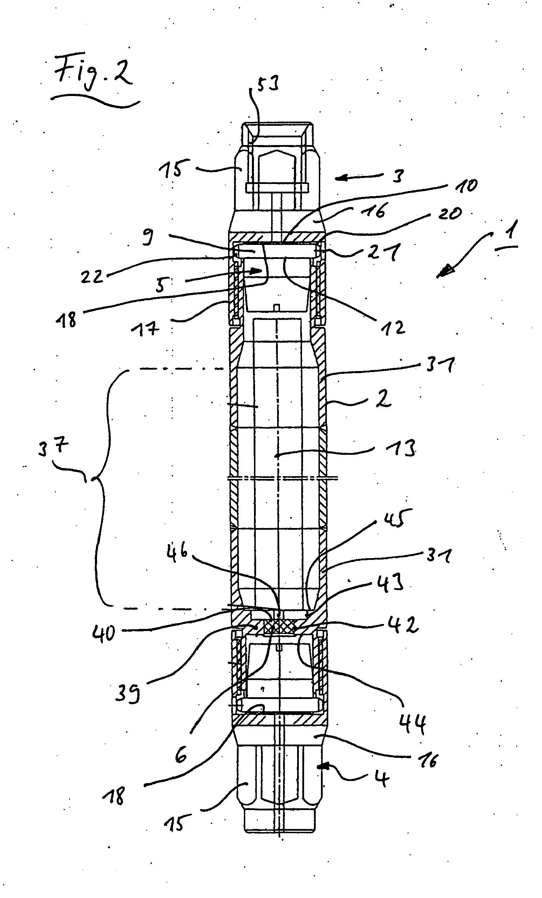

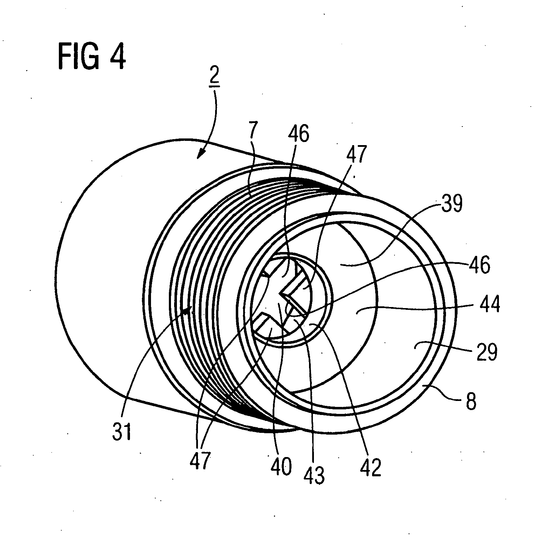

Die Enden des Hüllrohrs 2 weisen einen Innendurchmesser 34 auf, der gegenüber dem Außendurchmesser des zylindrischen Abschnitts 28 so bemessen ist, dass dieser spielfrei oder mit geringem Radialspiel im Endabschnitt eines Hüllrohrs 2 einliegt. Der vom Außengewinde 7 umfasste Innenwandbereich des Endabschnitts eines Hüllrohrs 2 geht über eine sich radial erweiternde Schrägschulter 36 in einem Längsabschnitt 37 mit vergrößertem Innendurchmesser über. Im Bereich des unteren Endes des Hüllrohrs 2 ist zwischen der Schrägschulter 36 und dem den Fortsatz 27 aufnehmenden Bereich des Endabschnitts 31 eine Querwand 39 vorhanden, die von einer zentralen Öffnung 40 durchsetzt ist (siehe Fig. 2 und 4). Die Öffnung 40 weist zwei Längsabschnitte 42,43 auf, wobei der Längsabschnitt 42 in die der Verschlusskappe 4 zugewandten unteren Seite 44 der Querwand 39 ausmündet und den Filtereinsatz 6 aufnimmt. Der Längsabschnitt 43 ist radial erweitert und mündet in der oberen Seite 45 der Querwand 39 aus. Der Längsabschnitt 43 weist eine kreuzförmige Querschnittsform auf, setzt sich also aus zwei rechtwinklig zueinander verlaufenden Schlitzen 46 zusammen. Auf diese Weise sind Wandabschnitte 47 gebildet, die in den Öffnungslängsabschnitt 42 hineinstehen und die einen Tragrost für einen in den Behälter 1 eingebrachten Gegenstand, etwa ein Brennstab, bilden dabei aber eine fluidische Verbindung zwischen dem unteren Endabschnitt 31 und dem sich oberhalb der Querwand 39 befindlichen Innenraum des Hüllrohrs 2 gewährleisten.

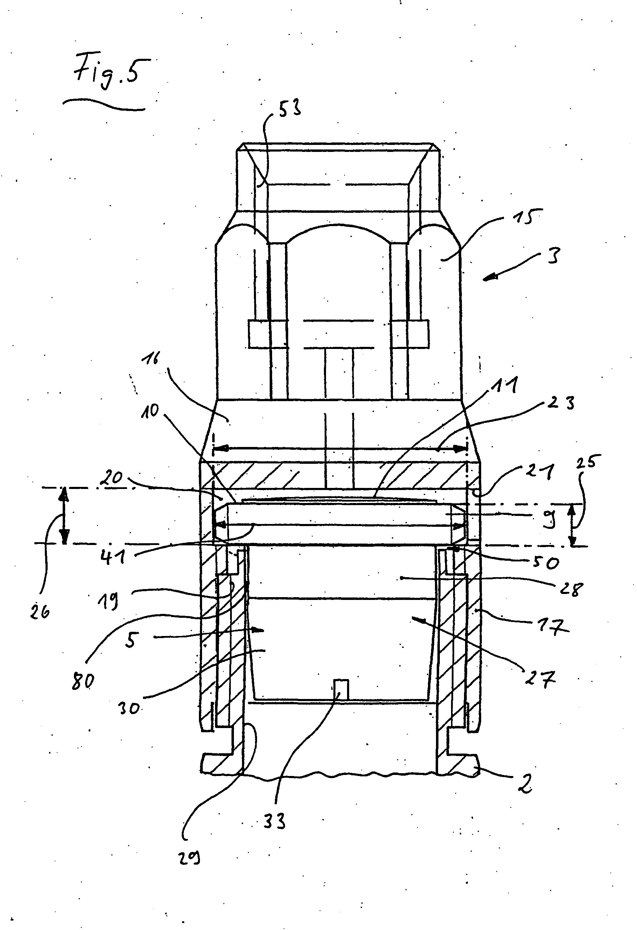

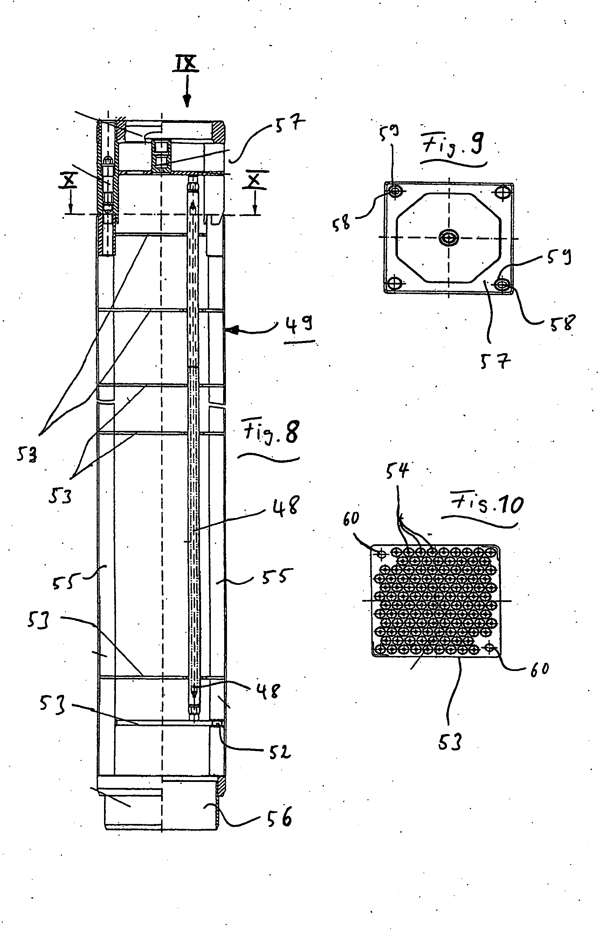

Zum Beladen mit einem Brennstab 48 (Fig. 8) wird ein Behälter 1 von einer Struktur, beispielsweise von dem in Fig. 8 dargestellten und später näher erläuterten Köcher 49 bei vertikaler Ausrichtung festgehalten. Die obere Verschlusskappe 3 ist entfernt, wobei die untere Verschlusskappe 4 lose auf das Hüllrohr 2 aufgeschraubt ist. Nachdem ein Brennstab 48 mit Hilfe eines Manipulators in den Behälter 1 eingeführt wurde, wird die obere Verschlusskappe 3 mit Hilfe eines Manipulators 72 auf das Außengewinde 7 des oberen Endabschnitts des Hüllrohrs 2 aufgedreht, jedoch nicht festgezogen. Es liegt nun eine Situation vor, wie sie für das obere Behälterende in Fig. 5 dargestellt ist. Der Längsabschnitt 9 des Dichtelements 5 sitzt mit seinem Randbereich auf dem Ende des Innengewindes 19 auf. Aufgrund des noch nicht festgezogenen Zustands der Verschlusskappen 3,4 nehmen die Dichtelemente 5 eine derartige Position ein, dass zwischen Ihrer Dichtfläche 14 und der mit dieser im Sinne einer Dichtpaarung zusammenwirkende Stirnfläche 8 des Hüllrohrs 2 eine Trennfuge 50 vorhanden ist, durch die ein Gas über die Belüftungsöffnung 21 in den Behälter eingeblasen und darin befindliches Wasser über den gleichen Weg in der unteren Verschlusskappe 4 verdrängt wird. Dazu wird das untere Ende 73 des Manipulators 72 auf die obere Verschlusskappe 3 aufgesteckt, welches eine den Betätigungsabschnitt 15 der Verschlusskappe 3 formschlüssig aufnehmende Ausnehmung aufweist. Die Ausnehmung 74 ist in die untere Stirnseite einer zentral im Manipulator 72 drehbar angeordneten und in das Ende 73 hineinragenden Stange 75 eingebracht. Die Stange 75 ist koaxial von einem Rohr 76 umfasst, welches sich über das untere, die Ausnehmung 74 aufweisende Ende der Stange 75 hinaus erstreckt. Das untere Ende der Innenwandung des Rohrs 76 ist in Form eines nach unten erweiterten Konus 77 ausgebildet. Unterhalb des Konus 77 ist eine Dichthülse 78 aus Elastomermaterial angeordnet. Das Rohr 76 ist axial verschiebbar gehalten. Bei einer Bewegung nach unten verschiebt sich der Konus 77 über die Dichthülse 78, wodurch sich diese radial verengt. Die Dichthülse 78 schmiegt sich dabei an einem sich unterhalb der Belüftungsöffnung 21 befindlichen Bereich der Verschlusskappe 3 an und dichtet somit das untere Ende 73 des Manipulators 72 gegenüber der Umgebung ab. Über einen Einlassstutzen 79 wird dem Ende 73 des Manipulators 72 ein Inertgas gas zugeführt. Dieses strömt über Axialspalte (nicht dargestellt) zwischen der Stange 75 und der Innenseite des Rohrs 76 in den sich unterhalb der Ausnehmung 74 befindlichen Raum des Rohres 76. Von dort gelangt es über die Belüftungsöffnung 21 in den Innenraum 20. Von dort gelangt es über einen aufgrund des oben erwähnten Radialspiels vorhandenen Radialspalt zwischen dem Hülsenabschnitt 17 und dem Längsabschnitt 9 des Dichtelements 5 zur Trennfuge 50 und von dort über einen zwischen dem zylindrischen Abschnitt 28 des Fortsatzes 27 und der Innenfläche 29 des Hüllrohrs 2 vorhandenen Radialspalt 80 in das Innere des Hüllrohrs.

Nachdem das Wasser vollständig aus dem Behälter 1 entfernt ist, was an dem Austreten von Gasblasen aus der unteren Verschlusskappe 4 erkennbar ist, wird mit Hilfe des Manipulators 72 die Verschlusskappe 3 durch eine Drehbewegung der Stange 75 festgezogen. Der Betätigungsabschnitt 15 der unteren Verschlusskappe 4 ragt formschlüssig in eine Ausnehmung 52 im Köcher 49 (Fig. 8) hinein. Infolge der Drehbetätigung der Stange 75 wird auch die untere Verschlusskappe 4 festgezogen. Anschließend wird der Behälter 1 innerhalb des Köchers 49 an eine andere Position gesetzt, um die Ausnehmung 52 für die Beladung eines weiteren Behälters nutzen zu können. Für die dafür erforderliche Handhabung des Behälters 1 ist in der oberen Verschlusskappe 3 eine zentrale Gewindebohrung 53 vorhanden.

Ein Köcher 49 umfasst mehrere in Axialrichtung verteilte Abstandhalter 53. Diese sind im wesentlichen quadratische oder rechteckige Platten, in die eine Vielzahl von Bohrungen 54 eingebracht sind. Im Beladezustand sind diese Bohrungen von Behältern 1 durchsetzt. An ihren Ecken sind die Abstandhalter über Winkelbleche 55 miteinander verbunden. Unterseits wird der Köcher durch ein Fußteil 56 und oberseits durch ein lösbar fixiertes Kopfteil 57 abgeschlossen. Das Kopfteil 57 wird auf den Köcher 49 aufgesetzt, wenn dieser mit der vorgesehenen Anzahl von Behältern 1 befüllt ist. Die gesamte Struktur wird über zwei Zugstangen 58 stabilisiert. Diese sind an zwei gegenüberliegenden Ecken des Köchers angeordnet und durchgreifen entsprechende Bohrungen 59,60 im Kopfteil 57 bzw. in den Abstandhaltern 50.

Bei der in Fig. 6 und 7 dargestellten zweiten Ausführungsvariante eines Behälters 1a sind die Dichtelemente 5a auf eine andere Weise an den Verschlusskappen 3a,4a fixiert. Das Dichtelement 5a weist nicht auf seiner Dichtseite 12 sondern auf dieser gegenüberliegenden Seite 10 einen zentralen, in Richtung der Mittellängsachse 13 vorstehenden Fortsatz, nämlich einen Fixierzapfen 59 auf. Der Fixierzapfen 59 ist in einen Hals 60 und in einen radial erweiterten Kopf 62 unterteilt und ragt im Montagezustand in eine sich koaxial zur Mittellängsachse 13 erstreckenden Bohrung 63 in der Querwand 18 der Verschlusskappe 3a hinein. Die Bohrung 63 weist einen sich von der Querwand 18 weg erstreckenden verengten Bohrungsbereich 64 und einen sich daran anschließenden radial erweiterten Bohrungsbereich 65 auf. Der Durchmesser 66 des Kopfes 62 ist geringfügig kleiner als der Durchmesser 67 des verengten Bohrungsbereiches 64. Die Durchmesserdifferenz ist bei derart, dass der Kopf 62 zur Fixierung des Dichtelements 5a an der Verschlusskappe 3a spielfrei durch den verengten Bohrungsbereich 64 hindurch steckbar ist. Der Durchmesser 67 des radial erweiterten Bohrungsbereiches 65 ist größer als der Durchmesser 66 des Kopfes 62. Außerdem ist der Durchmesser 68 des Halses 60 kleiner als der Durchmesser 67 des verengten Bohrungsbereichs 64. Die Länge 69 des verengten Bohrungsbereiches 64 ist kleiner als die Länge 70 des Halses 60. Durch die genannten Durchmesser- und Längenrelationen ist der Fixierzapfen 59 in der Bohrung 63 mit Axial- und Radialspiel fixiert. Aufgrund der engen Passung zwischen Kopf 62 und verengtem Bohrungsbereich 64 kann der Kopf 62, einmal durch den verengten Bereich 64 hindurchgestreckt, nicht mehr selbsttätig aus der Bohrung 63 herausrutschen, da hierzu eine exakte koaxiale Ausrichtung des Kopfes 62 zur Mittellängsachse 13 erforderlich wäre. Aber selbst bei diesem äußerst unwahrscheinlichen Fall wäre die Reibung zwischen Kopf 62 und der Wandung des verengten Bohrungsbereiches 64 zu groß, als dass sie durch das Eigengewicht des Dichtelements 5a überwunden werden könnte.

Das Einbringen eines radiaktiven Gegenstandes, etwa eines Brennstabes 48 in einen Behälter 1a erfolgt auf die oben geschilderte Weise. Auch bei dem Behälter 1a wird das Dichtelement 5a von den Verschlusskappen 3a,4a in einer Axialposition gehalten, die eine Trennfuge (in Fig. 6,7 nicht gezeigt) zwischen der Dichtfläche 14 des Dichtelements 5a und der Stirnseite 8 des Hüllrohrs 2 frei lässt.

## Patentansprüche

1. Behälter zur gasdichten Kapselung eines radioaktiven Gegenstandes, mit einem Hüllrohr (2), dessen beidseitige Öffnungen von jeweils einer Verschlusskappe (3,4) verschlossen sind,
**gekennzeichnet durch**
folgende weitere Ausgestaltung:
- die Enden des Hüllrohrs (2) sind jeweils mit einem Außengewinde (7) versehen,
- die Verschlusskappen (3,4) weisen einen mit einem Innengewinde (19) auf das Außengewinde (7) der Hüllrohrenden aufgeschraubten Hülsenabschnitt (17) auf,
- in jeder Verschlusskappe (3,4) ist ein Dichtelement (5) angeordnet, das die Innenquerschnittsfläche des Hüllrohrs (2) überdeckt und mit einer Dichtfläche (14) mit einer die Innenquerschnittsfläche umgrenzenden Gegenfläche zusammenwirkt,
- des Dichtelement (5) ist mit der Verschlusskappe (3,4) derart verbunden, dass es bei festgezogener Verschlusskappe (3,4) mit seiner Dichtfläche (14) auf die Gegenfläche aufgepresst und beim Lösen der Verschlusskappe (3,4) von der Gegenfläche abgehoben wird,
- in jedem Hülsenabschnitt (17) ist ein die jeweilige Gegenfläche des Hüllrohrs (2) und die Dichtfläche (14) umschließender Innenraum (20) vorhanden, der über eine Belüftungsöffnung (2i) in der Wand des Hülsenabschnitts (17) mit der Umgebung verbunden ist.

2. Behälter nach Anspruch 1,
**dadurch gekennzeichnet,**
**dass** die Gegenflächen von den Stirnflächen (8) des Hüllrohrs (2) gebildet sind.

3. Behälter nach Anspruch 1 oder 2,
**dadurch gekennzeichnet,**
**dass** der Innenraum (20) gegenüber dem Innengewinde (19) der Verschlusskappe (3,4) radial erweitert ist und dass darin ein die Dichtfläche (14) tragender Längsabschnitt (9) des Dichtelements (5) drehbar sowie mit Axial- und Radialspiel gehalten ist.

4. Behälter nach Anspruch 3,
**dadurch gekennzeichnet,**
**dass** die der Dichtfläche (14) gegenüberliegende Seite (10) des Dichtelements (5) einen sich konkav vorwölbenden, bei festgezogener Verschlusskappe (3, 4) von dieser beaufschlagten Flächenbereich (11) aufweist.

5. Behälter nach Anspruch 3 oder 4,
**dadurch gekennzeichnet,**
**dass** der im Innenraum (20) angeordnete Längsabschnitt (9) des Dichtelements (5) ein mit dem Innengewinde (19) des Hülsenabschnitts (17) zusammenwirkendes Außengewinde (22) trägt, wobei die lichte Weite (23) des Innenraums (20) größer ist als der Durchmesser des Außengewindes (22).

6. Behälter nach Anspruch 5,
**dadurch gekennzeichnet,**
**dass** aus der die Dichtfläche (14) tragenden Dichtseite (12) des Dichtelements (5) ein zentraler, von der Dichtfläche (14) umgriffener, sich rechtwinklig zur Dichtfläche (12) erstreckender und in das Hüllrohr (2) hinein ragender Fortsatz (27) angeformt ist.

7. Behälter nach Anspruch 6,
**dadurch gekennzeichnet,**
**dass** der Fortsatz (27) einen sich von der Dichtseite (12) weg erstreckenden, mit der Innenfläche (29) des Hüllrohrs (2) zusammenwirkenden zylindrischen Abschnitt (28) und daran anschließend einen sich verjüngenden Konusabschnitt (30) aufweist.

8. Behälter nach Anspruch 3 oder 4,
**dadurch gekennzeichnet,**
**dass** an der der Dichtfläche (14) gegenüberliegenden Seite (10) des Dichtelements (5a) ein zentraler, rechtwinklig zur Dichtfläche (14) ausgerichteter zylindrischer Fixierzapfen (59) angeformt ist, der sich in eine zentralen Bohrung (63) in einer Querwand (18) der Verschlusskappe (3a,4a) hinein erstreckt und darin mit Axial- und Radialspiel fixiert ist.

9. Behälter nach Anspruch 8,
**dadurch gekennzeichnet,**
**dass** der Fixierzapfen (59) in einen Hals (60) und einen radial erweiterten Kopf (62) unterteilt ist, und dass die Bohrung (63) einen ersten, sich von der Querwand (18) weg erstreckende verengten Bohrungsbereich(64) und einen sich daran anschließenden radial erweiterten Bohrungsbereich (65) aufweist, wobei der Kopf (60) mit Radialspiel im erweiterten Bohrungsbereich (65) angeordnet und durch den verengten Bohrungsbereich (64) spielfrei hindurch steckbar ist, und wobei der Hals (60) des Fixierzapfens (59) den verengten Bohrungsbereich (64) mit Radial- und Axialspiel durchsetzt.

10. Behälter nach einem der Ansprüche 1 bis 9,
**dadurch gekennzeichnet,**
**dass** die Dichtelemente (5) aus dem gleichen Werkstoff bestehen wie das Hüllrohr (2) und die Verschlusskappen (3,4).

11. Verfahren zur gasdichten Abkapselung eines radioaktiven Gegenstands, bei dem dieser unter Wasser in einem rohrförmigen, beidseitig mit einem Verschlusselement verschließbaren Behälter eingesetzt wird, wobei in den Behälter eingedrungenes Wasser durch Einblasen von Gas in das obere Behälterende entfernt wird,
**dadurch gekennzeichnet, dass**
- als Behälter (1) ein Hüllrohr verwendet wird, dessen obere und untere Öffnung mit einer aufgeschraubten Verschlusskappe (3,4) verschließbar ist, wobei die Verschlusskappen (3,4) im festgezogenen Zustand jeweils ein Dichtelement (5) an eine Gegenfläche am Hüllrohr (2) andrücken und
wobei das Dichtelement (5) im gelösten Zustand einer Verschlusskappe (3,4) von der Gegenfläche unter Freilassung einer Trennfuge (50) entfernt ist,
- das Gas bei gelöster oberer Verschlusskappe (3) über die Trennfuge (50) durch die Belüftungsöffnung (21) eingeblasen und Wasser über die Trennfuge (50) der unteren Verschlusskappe (4) durch die Belüftungsöffnung (21) aus dem Behälter (1) verdrängt wird, und
- nach vollständiger Verdrängung des Wassers aus dem Behälter (1) dieser durch Festziehen der Verschlusskappen (3, 4) gasdicht verschlossen wird.

12. Verfahren nach Anspruch 11,
**dadurch gekennzeichnet,**
**dass** der Behälter (1) auf eine Stützstruktur gestellt wird, an welcher die untere Verschlusskappe (4) drehfixiert gehalten ist.

13. Verfahren nach Anspruch 12,
**dadurch gekennzeichnet,**
**dass** ein mehrere Behälter (1) aufnehmender Köcher (49) verwendet wird, in dessen unteren Bereich eine Ausnehmung (52) zur Drehfixierung der unteren Verschlusskappe (4) vorhanden ist.

14. Verfahren nach Anspruch 11, 12 oder 13,
**dadurch gekennzeichnet,**
**dass** damit defekte Brennstäbe (48) gasdicht abgekapselt werden.

15. Verfahren nach Anspruch 11, 12 oder 13,
**dadurch gekennzeichnet,**
**dass** damit Teile von Incoremeßlanzen gasdicht abgekapselt werden.

16. Verfahren nach einem der Ansprüche 11 bis 15,
**gekennzeichnet durch**
die Verwendung eines Behälters nach einem der Ansprüche 1 bis 10.

## Claims

1. Container for the gastight encapsulation of a radioactive object, having a cladding tube (2), the openings of which, which are located on both sides, are closed off in each case by a closure cap (3, 4), **characterized by** the following further configuration:
- the ends of the cladding tube (2) are each provided with an external thread (7),
- the closure caps (3, 4) have a cladding section (17) which is screwed onto the external thread (7) of the cladding tube ends by way of an internal thread (19),
- a sealing element (5), which covers the inside cross-sectional area of the cladding tube (2) and interacts by way of a sealing surface (14) with a counter surface delimiting the inside cross-sectional area, is arranged in each closure cap (3, 4),
- the sealing element (5) is connected to the closure cap (3, 4) in a manner such that, when the closure cap (3, 4) is pulled tight, it is pressed onto the counter surface by way of its sealing surface (14) and, when the closure cap (3, 4) is loosened, it is lifted off the counter surface,
- each cladding section (17) has an internal space (20), which surrounds the respective counter surface of the cladding tube (2) and the sealing surface (14) and is connected to the surrounding area by way of a ventilation opening (21) in the wall of the cladding section (17).

2. Container according to Claim 1, **characterized in that** the counter surfaces are formed by the end faces (8) of the cladding tube (2).

3. Container according to Claim 1 or 2, **characterized in that** the internal space (20) is radially extended with respect to the internal thread (19) of the closure cap (3, 4) and **in that** the internal space holds, in a rotational manner with axial and radial clearance, a longitudinal section (9) of the sealing element (5), which longitudinal section (9) carries the sealing surface (14).

4. Container according to Claim 3, **characterized in that that** side (10) of the sealing element (5) which is located opposite the sealing surface (14) has a concavely curved surface region (11) onto which the closure cap (3, 4) bears when the latter is pulled tight.

5. Container according to Claim 3 or 4, **characterized in that** the longitudinal section (9) of the sealing element (5), which longitudinal section (9) is arranged in the internal space (20), carries an external thread (22) which interacts with the internal thread (19) of the cladding section (17), with the clear width (23) of the internal space (20) being larger than the diameter of the external thread (22).

6. Container according to Claim 5, **characterized in that** a central extension (27), which is surrounded by the sealing surface (14), extends at right angles to the sealing surface (14) and protrudes into the cladding tube (2), is integrally formed on that sealing side (12) of the sealing element (5) which carries the sealing surface (14).

7. Container according to Claim 6, **characterized in that** the extension (27) has a cylindrical section (28), which extends away from the sealing side (12) and interacts with the internal surface (29) of the cladding tube (2), and an adjoining tapered cone section (30).

8. Container according to Claim 3 or 4, **characterized in that** a central cylindrical fixing pin (59) is integrally formed onto that side (10) of the sealing element (5a) which is located opposite the sealing surface (14), which fixing pin is aligned at right angles to the sealing surface (14), extends into a central bore (63) in a cross wall (18) of the closure cap (3a, 4a) and is fixed therein with axial and radial clearance.

9. Container according to Claim 8, **characterized in that** the fixing pin (59) is subdivided into a neck (60) and a radially extended head (62), and **in that** the bore (63) has a first narrowed bore region (64) which extends away from the cross wall (18) and an adjoining radially extended bore region (65), with the head (60) being arranged with radial clearance in the extended bore region (65) and being capable of being inserted, without clearance, through the narrowed bore region (64), and with the neck (60) of the fixing pin (59) passing through the narrowed bore region (64) with radial and axial clearance.

10. Container according to one of Claims 1 to 9, **characterized in that** the sealing elements (5) are made of the same material as the cladding tube (2) and the closure caps (3, 4).

11. Method for the gastight encapsulation of a radioactive object, in which the latter is inserted under water into a tubular container which can be closed on both sides with a closure element, wherein water which has penetrated into the container is removed by injecting gas into the upper container end,
**characterized in that**
- a cladding tube is used as the container (1), the upper and lower openings of which cladding tube can be closed with a screwed-on closure cap (3, 4), with the closure caps (3, 4), when they are pulled tight, each pressing a sealing element (5) onto a counter surface on the cladding tube (2) and with the sealing element (5), when a closure cap (3, 4) is loosened, being removed from the counter surface with a separating gap (50) being left free,
- the gas, when the upper closure cap (3) is loosened, is injected by way of the separating gap (50) through the ventilation opening (21) and water is pushed out of the container (1) through the ventilation opening (21) via the separating gap (50) of the lower closure cap (4), and
- the container (1) is closed in a gastight manner by pulling tight the closure caps (3, 4) after the water has been completely pushed out of the container (1).

12. Method according to Claim 11, **characterized in that** the container (1) is placed onto a support structure, on which the lower closure cap (4) is held in a rotationally fixed manner.

13. Method according to Claim 12, **characterized in that** a quiver (49), which holds a plurality of containers (1) and in the lower region of which a cutout (52) for rotationally fixing the lower closure cap (4) is present, is used.

14. Method according to Claim 11, 12 or 13,
**characterized in that** it can be used to encapsulate defective fuel rods (48) in a gastight manner.

15. Method according to Claim 11, 12 or 13,
**characterized in that** it can be used to encapsulate parts of in-core measuring lances in a gastight manner.

16. Method according to one of Claims 11 to 15, **characterized by** the use of a container according to one of Claims 1 to 10.

## Revendications

1. Conteneur pour l'encapsulation étanche au gaz d'un objet radioactif, avec un tube de gainage (2) dont les ouvertures bilatérales sont fermées chacune par une calotte de fermeture (3, 4),
**caractérisé par**
la conception ultérieure suivante :
- les extrémités du tube de gainage (2) sont munies chacune d'un filetage (7),
- les calottes de fermeture (3, 4) comportent une partie en douille (17) vissée par un taraudage (19) sur le filetage (7),
- dans chaque calotte de fermeture (3, 4) est disposé un élément d'étanchéité (5) qui recouvre la surface de section transversale intérieure du tube de gainage (2) et qui par une surface d'étanchéité (14) coopère avec une surface antagoniste délimitant la surface de section transversale intérieure,
- l'élément d'étanchéité (5) est relié à la calotte de fermeture (3, 4) de sorte que lorsque la calotte de fermeture (3, 4) est serrée à bloc, il soit compressé par sa surface d'étanchéité (14) sur la surface antagoniste et lors du desserrage de la calotte de fermeture (3, 4), il se relève de la surface antagoniste,
- dans chaque partie en douille (17) se trouve un espace intérieur (20) entourant la surface antagoniste concernée du tube de gainage (2) et la surface d'étanchéité (14), qui par l'intermédiaire d'un orifice d'aération (21) dans la paroi de la partie en douille (17) est relié avec l'environnement.

2. Conteneur selon la revendication 1,
**caractérisé en ce que** la surface antagoniste est formée par les faces frontales (8) du tube de gainage (2).

3. Conteneur selon la revendication 1 ou 2,
**caractérisé en ce que** l'espace intérieur (20) est radialement élargi par rapport au taraudage (19) de la calotte de fermeture (3, 4) et **en ce qu'**à l'intérieur, un tronçon longitudinal (9) de l'élément d'étanchéité (5) portant la surface d'étanchéité (14) est logé dans ce dernier de façon rotative, ainsi qu'avec un jeu axial et radial.

4. Conteneur selon la revendication 3,
**caractérisé en ce que** le côté (10) de l'élément d'étanchéité (5) opposé à la surface d'étanchéité (14) comporte une zone de surface (11) se recourbant sous forme concave vers l'avant, lorsque la calotte de fermeture (3, 4) est vissée à bloc, soumise par cette dernière.

5. Conteneur selon la revendication 3 ou 4,
**caractérisé en ce que** le tronçon longitudinal (9) de l'élément d'étanchéité (5) disposé dans l'espace intérieur (20) porte un filetage (22) coopérant avec le taraudage (19) de la partie en douille (17), l'ouverture libre (22) de l'espace intérieur (20) étant supérieure au diamètre du filetage (22).

6. Conteneur selon la revendication 5,
**caractérisé en ce qu'**à partir du côté d'étanchéité (12) de l'élément d'étanchéité (5) portant la surface d'étanchéité (14) est rapporté un prolongement (27), entouré par la surface d'étanchéité (14), s'étendant à angle droit vers la surface d'étanchéité (14) et saillant dans le tube de gainage (2).

7. Conteneur selon la revendication 6,
**caractérisé en ce que** le prolongement (27), comporte une partie cylindrique (28) s'éloignant du côté d'étanchéité (12), coopérant avec la surface interne (29) du tube de gainage (2) et se raccordant à celle ci, une partie conique (30) qui se rétrécit.

8. Conteneur selon la revendication 3 ou 4,
**caractérisé en ce que**
sur le côté (10) de l'élément d'étanchéité (5a) qui est opposé à la surface d'étanchéité (14) est rapporté un tenon de fixation (59) cylindrique central, orienté à la perpendiculaire par rapport à la surface d'étanchéité (14), qui s'étend dans un perçage central (63) dans une paroi transversale (18) de la calotte de fermeture (3a, 4a) et qui y est fixé avec un jeu axial et radial.

9. Conteneur selon la revendication 8,
**caractérisé en ce que** le tenon de fixation (59) est divisé en un col (60) et en une tête (62) élargie en direction radiale et **en ce que** le perçage (63) comporte une première zone de perçage rétrécie (64), s'étendant en s'éloignant de la paroi transversale (18) et une zone de perçage (65) élargie en direction radiale, qui se raccorde sur cette dernière, la tête (60) étant disposée avec un jeu radial dans la zone de perçage élargie (65) et étant susceptible de s'enficher sans jeu à travers la zone de perçage rétrécie (64), le col (60) du tenon de fixation (59) traversant la zone de perçage rétrécie (64) avec un jeu radial et axial.

10. Conteneur selon l'une quelconque des revendications 1 à 9,
**caractérisé en ce que** les éléments d'étanchéité (5) sont dans la même matière que le tube de gainage (2) et la calotte de fermeture (3, 4).

11. Procédé pour l'encapsulation étanche au gaz d'un objet radioactif, lors duquel ce dernier est inséré sous eau dans un conteneur tubulaire, susceptible de se fermer des deux côtés avec un élément de fermeture, l'eau ayant pénétré dans le conteneur étant éliminée par soufflage de gaz dans l'extrémité supérieure du conteneur,
**caractérisé en ce que**
- on utilise en tant que conteneur (1) un tube de gainage, dont l'ouverture supérieure et inférieure est susceptible de se fermer par une calotte de fermeture (3, 4) vissée, à l'état serré à bloc, les calottes de fermeture (3, 4) appuyant chacune un élément d'étanchéité (5) contre une surface antagoniste sur le tube de gainage (2) et à l'état desserré d'une calotte de fermeture (3, 4), l'élément d'étanchéité (5) étant éloigné de la surface antagoniste, en laissant libre un joint de séparation (50),
- lorsque la calotte de fermeture supérieure (3) est desserrée, le gaz est insufflé par l'intermédiaire du joint de séparation (50) à travers l'orifice d'aération (21) et de l'eau est refoulée hors du conteneur (1) par l'intermédiaire du joint de séparation (50) de la calotte de fermeture inférieure (50), à travers l'orifice d'aération (21) et
- après refoulement complet de l'eau hors du conteneur (1) ce dernier est fermé de manière étanche au gaz, par serrage à bloc des calottes de fermeture (3, 4).

12. Procédé selon la revendication 11,
**caractérisé en ce qu'**on pose le conteneur (1) sur une structure d'appui, sur laquelle la calotte de fermeture inférieure (4) est maintenue par fixation par rotation.

13. Procédé selon la revendication 12,
**caractérisé en ce qu'**il est utilisé un carquois (49) réceptionnant plusieurs conteneurs (1), dans la zone inférieure duquel se trouve un évidement (52) pour la fixation par rotation de la calotte de fermeture inférieure (4).

14. Procédé selon la revendication 11, 12 ou 13,
**caractérisé en ce qu'**il permet d'encapsuler de façon
étanche au gaz des crayons combustibles (48) défectueux.

15. Procédé selon la revendication 11, 12 ou 13,
**caractérisé en ce qu'**il permet d'encapsuler de façon étanche au gaz des parties de lances de mesure dans le coeur.

16. Procédé selon l'une quelconque des revendications 11 à 15, **caractérisé par**
l'utilisation d'un conteneur selon l'une quelconque des revendications 1 à 10.
